# EUROPEAN PATENT APPLICATION

(11) **EP 4 388 858 A1**
(43) Date of publication of application: **26.06.2024**
(21) Application number: 23204234.1
(22) Date of filing: 18.10.2023
(51) Int. Cl.: A01D 87/12

(54) **WORK VEHICLE**

(30) Priority: 21.12.2022 US 202218086091
(71) Applicant: CLAAS Omaha Inc., Omaha, NE 68138 (US)
(72) Inventor: Wilkening, Kevin, La Vista, NE 68128 (US); Lahmann, Dirk, 33790 Halle/Westf. (DE); Jürgens, Holger, 33775 Versmold (DE)
(74) Representative: CLAAS Gruppe

(57) **Abstract**

A work vehicle and a method for operating a work vehicle are disclosed. The work vehicle comprises a work vehicle chassis, a lifting assembly, a bale handling implement, a sensor arrangement being positioned and configured to optically detect the bale on the ground and a position and/or a space orientation of the bale and a driver assistance system comprising a controller. The sensor arrangement is configured to optically identify a target location on the bale used for picking up the bale with the bale handling implement, the lifting assembly being controlled by the controller based on the target location while the work vehicle is approaching the bale such that the bale handling implement is positioned at the target location on the bale when picking up the bale from the ground.

## Description

### TECHNICAL FIELD

The present application relates generally to a work vehicle, such as a tractor or a telehandler and to a method for operating a work vehicle, such as a tractor or a telehandler.

### BACKGROUND

This section is intended to introduce various aspects of the art, which may be associated with exemplary embodiments of the present disclosure. This discussion is believed to assist in providing a framework to facilitate a better understanding of particular aspects of the present disclosure. Accordingly, it should be understood that this section should be read in this light, and not necessarily as admissions of prior art.

Work vehicles, such as for example a tractor or a telehandler, may be used for material handling operations, such as for picking up bales (e.g., round bales, rectangular bales or square bales) deposited on an agricultural field and to transfer the bales to a storage. To pick up a bale from the ground, the work machine typically comprises a bale handling implement (e.g., a bale spear or a bale grab), which is attached to a hydraulically-actuated lifting assembly (e.g., a front loader, a telescopic boom or a three point linkage). To pick up the bale from the ground an operator controls the work vehicle by manually controlling the speed and the steering of the work vehicle such that the work vehicle is successively approaching the bale on the ground. While approaching the bale, the operator of the work vehicle needs to control the hydraulically-actuated lifting assembly at the same time to adjust the bale handling implement in a position which allows to pick up the bale.

### BRIEF DESCRIPTION OF THE DRAWINGS

The present application is further described in the detailed description which follows, in reference to the noted drawings by way of non-limiting examples of exemplary implementation, in which like reference numerals represent similar parts throughout the several views of the drawings, and wherein:
Fig. 1 is a schematic and exemplary view of a work vehicle in the form of a telehandler with a bale handling implement for picking up bales from the ground of an agricultural field during a bale pick up operation; and
Fig. 2 a schematic and exemplary view of the work vehicle shown in FIG. 1 with the bale handling implement in a bale transfer position.

### DETAILED DESCRIPTION

As discussed above, the operator may control the work vehicle by manually controlling the speed and the steering of the work vehicle such that the work vehicle is successively approaching the bale on the ground. Such a procedure, however, may require considerable operator experience. Moreover, while approaching the bale, an operator may not be able to adequately see the bale on the ground, which might result in the bale handling implement missing an ideal position on the bale to pick up the bale from the ground. Further, during a workday, the operator may have to pick up lots of bales from the agricultural field which may cause operator fatigue that in turn may further reduce the accuracy when picking up the bales. Apart from these difficulties, the bales deposited on the ground may be wrapped with a net or plastic film. As such, when picking up a bale from the ground, there may be a high risk of the wrapping material being damaged due to a movement of the bale on the ground. Due to the wrapping material being damaged, the stability or integrity of the bale during the transport of the bale to the storage might be noticeably reduced.

In order to assist the operator while picking up the bales from the ground, guidance systems are disclosed that establish a projected trajectory of a bale handling implement using implement tracking data. Based on the projected trajectory, the operator may be able to control the work vehicle such that the bale handling implement is not missing the bale. EP 3 744 910 A2 discloses an implement guidance system.

Though such guidance systems may assist the operator of a work vehicle in more accurately positioning the bale handling implement relative to the bale on the ground, the operator still needs to manually control the different control units (e.g. any one, any combination, or all of a steering wheel, a speed pedal or levers for actuating the lifting assembly) by himself or herself.

Therefore, in one or some embodiments, a method and apparatus are disclosed to improve on or overcome the shortcomings as mentioned above. In particular, it is an object of the present invention to provide a work vehicle that improves or enhances the accuracy when picking up bales from the ground of an agricultural field while at the same time reducing the operator's workload.

In one or some embodiments, a work vehicle, such as a tractor or a telehandler, is disclosed that comprises a work vehicle chassis, a hydraulically-actuated lifting assembly mounted on the work vehicle chassis, a bale handling implement configured to pick up at least one bale from the ground, with the bale handling implement being attached to the hydraulically-actuated lifting assembly and the hydraulically-actuated lifting assembly being configured to enable movement of the bale handling implement relative to the work vehicle chassis in multiple degrees of freedom, a sensor arrangement attached to the work vehicle chassis, with the sensor arrangement being positioned and configured to optically detect the bale on the ground and a position and/or a space orientation of the bale, and a driver assistance system comprising a controller, with the controller being in communication with the sensor arrangement. The sensor arrangement may be configured to optically identify a predefined location on the bale for picking up the bale with the bale handling implement. The controller may be configured to automatically control the hydraulically-actuated lifting assembly based on the identified location on the bale while the work vehicle is approaching the bale such that the bale handling implement is positioned at the identified location on the bale when picking up the bale from the ground.

The system is configured to identify a predefined location or target location on the bale. In one embodiment, the sensor arrangement is configured to identify the predefined location or the target location on the bale. Alternatively, or in addition, the predefined location or target location on the bale may be determined by the controller based on sensor data generated by the sensor arrangement. Thus, at least one of the sensor arrangement or the controller determines the target location on the bale. In either instance, the combination of identifying a predefined location or target location on the bale (e.g., by the sensor arrangement and/or by the controller) and of automatically controlling the hydraulically-actuated lifting assembly based on the data generated by the sensor arrangement (e.g., the controller automatically controls the hydraulically-actuated lifting assembly) enables an automated high-precision pick-up of one or more bales from the ground with only a limited risk of damaging the wrapping material of the bale. At the same time, the operator of the work vehicle may be relieved from performing cumbersome control task of the work vehicle to pick up the bales. In this regard, the accuracy and the productivity of a bale pick up operation may be improved which, among other things, may result in an economic advantage.

In one or some embodiments, the controller is configured to automatically control the hydraulically-actuated lifting assembly such that the bale is remaining in its position on the ground while positioning the bale handling implement at the identified location on the bale (e.g., while the bale handling implement makes physical contact at the identified location on the bale).

Automatically controlling the hydraulically-actuated lifting assembly of the work vehicle such that the bale remains (or substantially remains) in its position on the ground while positioning the bale handling implement at or relative to the identified location (e.g., the target location) on the bale eliminates or at least significantly reduces the risk of damaging the wrapping material of the bale during the operation as the bale is not dragged on the ground during positioning of the bale handling implement.

In one or some embodiments, the sensor arrangement is configured to determine (such as continuously determine) a distance between the work vehicle and the bale while the work vehicle is approaching the bale, wherein the controller is configured to automatically control the hydraulically-actuated lifting assembly based on the determined distance between the work vehicle and the bale.

In one or some embodiments, the controller is configured to receive and automatically adjust the work vehicle speed while approaching the bale, wherein the controller is configured to automatically control the hydraulically-actuated lifting assembly based on the work vehicle speed. For example, the controller may automatically command the reduction of the speed of the vehicle. In one embodiment, the controller may automatically command the reduction of the speed based on the current speed of the vehicle (e.g., responsive to determining that the current speed is greater than X km/h, the speed is reduced to no more than Y km/h). Alternatively, the controller may automatically command the reduction of the speed regardless of the current speed of the vehicle (e.g., responsive to controlling the bale handling implement, the controller automatically reduces the speed to no more than Y km/h regardless of the current speed of the vehicle).

Using the distance between the work vehicle and the bale and/or the work vehicle speed as input parameters for the controller and the possibility of optionally adjusting the vehicle speed may significantly enhance the accuracy of positioning the bale handling implement relative to the bale and, thus, the bale pick up operation in total. Damaging the bale or the wrapping material of the bale due to a mispositioning of the bale handling implement while approaching the bale may be prevented.

In one or some embodiments, immediately before the bale handling implement reaches the position at the identified location on the bale, the controller is configured to automatically control a longitudinal movement of the bale handling implement based on the work vehicle speed such that the bale remains in its position on the ground when the bale handling implement is positioned at the identified location on the bale (e.g., while the bale handling implement makes physical contact at the identified location on the bale).

A coordinated movement of the work vehicle in the direction of the bale on the one hand and the hydraulically-actuated lifting assembly on the other hand may ensure that the bale is not dragged on the ground (e.g., the bale remains in its position on the ground) while positioning the bale handling implement at the target position for picking up the bale. For example, when using a bale spear as the bale handling implement, the hydraulically-actuated lifting assembly may successively be retracted in its longitudinal direction while the work vehicle is moving in the direction of the bale with a specific speed such that the bale in not dragged on the ground, but a force is sufficient to push the spear(s) into the bale.

In one or some embodiments, upon the bale handling implement being positioned at the identified location on the bale, the controller is configured to automatically control the hydraulically-actuated lifting assembly such that the bale handling implement with the bale attached is immediately lifted up.

Immediately lifting up the bale from the ground may ensure that the bale is not dragged on the ground or only dragged on the ground to a negligible minimum extent when the bale handling implement is positioned at the identified position (e.g., the target position) on the bale as the work vehicle is still constantly moving ahead. This may serve to prevent (or reduce the possibility of) the wrapping material of the bale being damaged during the operation.

In one or some embodiments, the controller is configured to automatically control the hydraulically-actuated lifting assembly such that the bale handling implement with the bale attached is positioned in a predefined bale transport position above the ground. This embodiment may enable the work vehicle to travel to a bale storage or to another bale on the ground with an optimum speed level, thus, speeding up the entire bale pick up operation while maintaining a secure attachment of the bale on the bale handling implement during the transport.

In one or some embodiments, the hydraulically-actuated lifting assembly comprises multiple actuators, wherein the controller is configured to automatically control the actuators of the hydraulically-actuated lifting assembly to move the bale handling implement in multiple degrees of freedom.

The capability of the controller to control the different actuators of the hydraulically-actuated lifting assembly may ensures or enable more precise positioning of the bale handling implement for picking up the bale from the ground regardless of the circumstances during operation such as, for example, the bale being deposited on a slope.

In one or some embodiments, the driver assistance system comprises a user interface, the user interface being in communication with the controller, wherein the user interface is configured to receive an input by an operator of the work vehicle initiating the automatic control of the hydraulically-actuated lifting assembly, predefining the location on the bale for picking up the bale and/or predefining the bale transport position.

Providing a user interface as a part of the driver assistance system may allow the operator to decide for himself or herself when to use the automatic control to pick up bales from the ground. Moreover, the operator may decide himself or herself based on his/her experience and surrounding conditions during operation which target parameters are reasonable to define depending on the circumstances.

In one or some embodiments, the bale handling implement is configured for picking up two or more bales.

In one or some embodiments, the bale handling implement is configured as a bale grab or a bale spear.

In one or some embodiments, the hydraulically-actuated lifting assembly is configured as a front loader, a telescopic boom or a three-point linkage.

According to a further embodiment of the invention, the sensor arrangement is configured as a camera arrangement, such as a 3D camera arrangement, and/or a laser sensor arrangement, such as a laser scanner arrangement. The sensor arrangement may be composed of a combination of different sensors, such as, for example, a 3D camera and a laser scanner.

Using a camera arrangement and/or a laser sensor arrangement as the sensor arrangement may enable any one, any combination, or all of a precise determination of the bale on the ground, the position of the bale, and/or a space orientation of the bale. Further, this implementation in combination with the controller of the driver assistance system may ensure that other objects on the ground not classified as a bale are not inadvertently picked up by the work vehicle.

In one or some embodiments, a method for operating the work vehicle, such as a tractor or a telehandler, is disclosed. The work vehicle may comprise a work vehicle chassis, a hydraulically-actuated lifting assembly mounted on the work vehicle chassis, a bale handling implement for picking up at least one bale from the ground, the bale handling implement being attached to the hydraulically-actuated lifting assembly and the hydraulically-actuated lifting assembly being configured to enable movement of the bale handling implement relative to the work vehicle chassis in multiple degrees of freedom, a sensor arrangement attached to the work vehicle chassis, the sensor arrangement being positioned and configured to optically detect the bale on the ground and a position and/or a space orientation of the bale, and a driver assistance system comprising a controller, the controller being in communication with the sensor arrangement. The method comprises optically identifying a predefined location on the bale for picking up the bale with the bale handling implement via a sensor arrangement and automatically controlling the hydraulically-actuated lifting assembly via a controller based on the identified location on the bale while the work vehicle is approaching the bale such that the bale handling implement is positioned at the identified location on the bale when picking up the bale from the ground.

In one or some embodiments, the method comprises automatically controlling the hydraulically-actuated lifting assembly via the controller such that the bale remains (or substantially remains) in its position on the ground while positioning the bale handling implement at the identified location on the bale (e.g., as the bale handling implement physically contacts at the identified location on the bale).

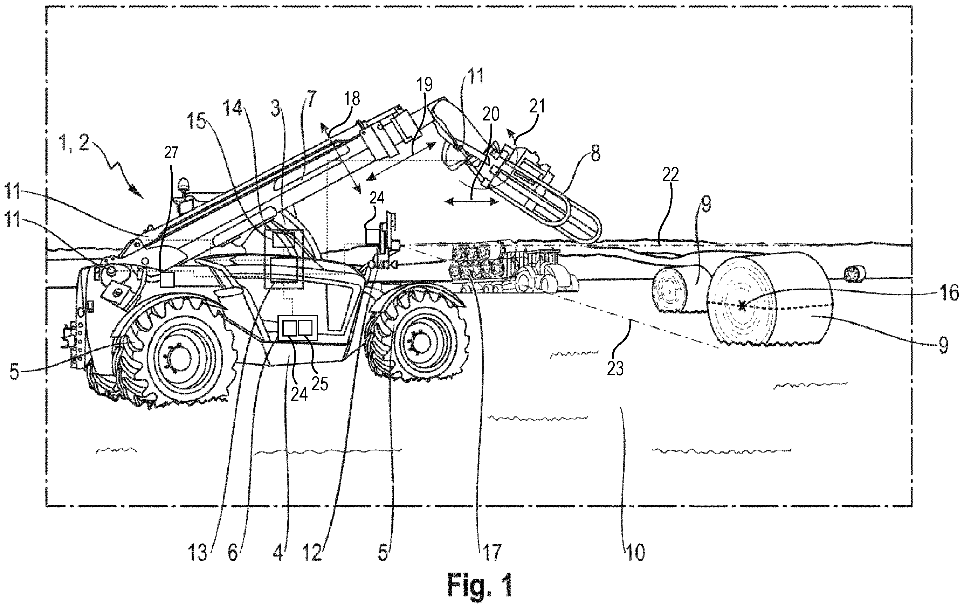

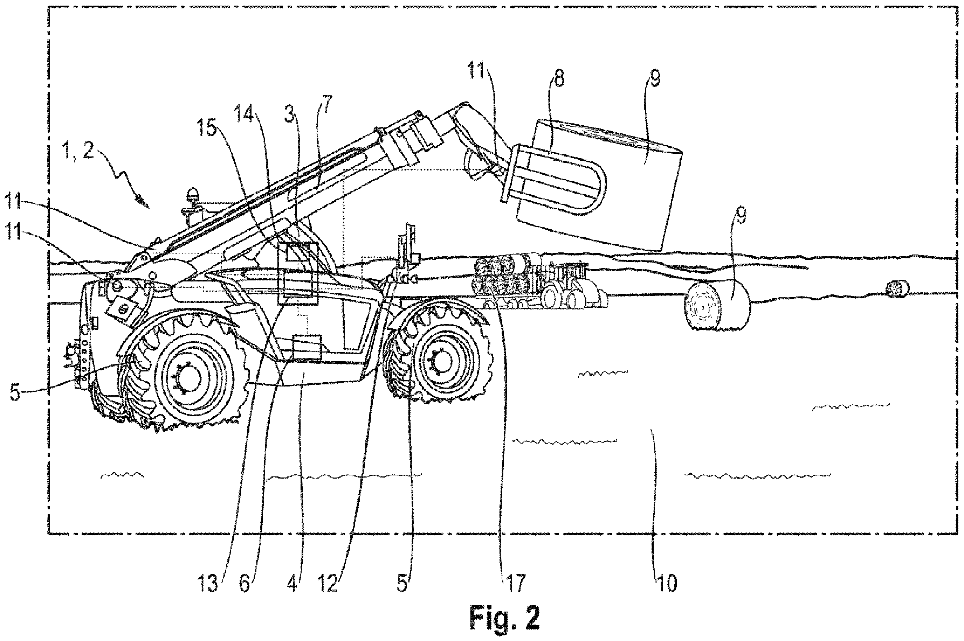

Referring to the figures, Figs. 1 and 2 illustrate a work vehicle 1 in the form of a telehandler 2. Other work vehicles are contemplated. The telehandler 2 may comprise a cabin 3 mounted on a work vehicle chassis 4 of the telehandler 2. The work vehicle chassis 4 may be mounted on ground engaging device 5, such as for example wheels, tracks, or the like, with at least part of the ground engaging device 5 being driven by a motor 6 via one or more gearboxes - not shown in Figs. 1 and 2. The telehandler 2 may further comprise a lifting assembly, such as a hydraulically-actuated lifting assembly 7. Various forms of the hydraulically-actuated lifting assembly 7 are contemplated. As one example, the hydraulically-actuated lifting assembly 7 may be in the form of a telescopic boom. A bale handling implement 8 for picking up one or more bales 9 from the ground of the agricultural field 10 may be attached to the hydraulically-actuated lifting assembly 7. In Figs. 1 and 2, the bale handling implement 8 may be configured as a bale grab having two grab arms for clamping the bale in between. The bale handling implement 8 in one configuration is a bale grab. Other configurations of the bale handling implement 8 are contemplated. For example, the bale handling implement 8 may be configured as a bale spear having one or multiple spears for impaling the bale to pick it up.

In one or some embodiments, the hydraulically-actuated lifting assembly 7 is configured to enable movement of bale handling implement 8 relative to the work vehicle chassis 4 in at least one degree of freedom, such as in multiple degrees of freedom, some of these illustrated in Fig. 1 by arrows 18, 19, 20, 21. In particular, the hydraulically-actuated lifting assembly 7 may comprise multiple hydraulic actuators 11 for performing any one, any combination, or all of: lifting and/or lowering; extending and/or retracting; laterally moving; or tilting parts of the hydraulically-actuated lifting assembly 7 and, thus, the bale handling implement 8.

The telehandler 2 may further comprise a sensor arrangement 12 which may be attached to the work vehicle chassis 4 of the telehandler 2. In one or some embodiments, the sensor arrangement 12 may be positioned on the work vehicle chassis 4 and configured to optically detect a bale 9 on the ground when the bale 9 is in a detection area of the sensor, indicated by two dotted lines 22, 23 extending from the sensor arrangement 12 in Fig. 1. Moreover, the sensor arrangement 12 may be positioned on a respective part of the work vehicle chassis 4 in order to optically detect a position of the bale 9 on the ground and/or a space orientation of the bale 9 on the ground. In one or some embodiments, the sensor arrangement 12 may comprise a camera arrangement, such as a 3D camera arrangement, which may allow the application of a large amount of standardized components. Alternatively, the sensor arrangement 12 may comprise a laser sensor arrangement, such as a laser scanner arrangement, configured to generate the respective sensor information (e.g., sensor data indicative of one or both of the position of the bale 9 on the ground and/or the space orientation of the bale 9 on the ground). Alternatively, the sensor arrangement 12 may comprise a camera arrangement (e.g., a camera) and a laser sensor arrangement (e.g., a laser sensor). The sensor arrangement 12 may further comprise an evaluation unit 24, illustrated in Fig. 1. In one embodiment, the evaluation unit 24 may comprise at least one processor and at least one memory (discussed further below). Alternatively, or in addition, the functionality of the evaluation unit 24 may be implemented in controller 13, which may be part of a driver assistance system 14 and in communication with the sensor arrangement 12. The evaluation unit 24 may be configured to evaluate the sensor signals generated by the sensor arrangement 12. For example, the evaluation unit 24 may analyze the sensor signals generated by the sensor arrangement 12 in order to determine the target location on the bale 9 (e.g., the evaluation unit 24 may access the target location as identified by the operator, which may be sent from the controller 13 to the sensor arrangement 12, and may use the target location as identified by the operator to determine where (e.g., which pixel or set of pixels in an image generated by the camera of the sensor arrangement) the target location is located).

The controller 13 may comprise any type of computing functionality, such as at least one processor 25 (which may comprise a microprocessor, controller, PLA, or the like) and at least one memory 26. The memory 26 may comprise any type of storage device (e.g., any type of memory). Though the processor 25 and the memory 26 are depicted as separate elements, they may be part of a single machine, which includes a microprocessor (or other type of controller) and a memory. Alternatively, the processor 25 may rely on memory 26 for all of its memory needs.

The processor 25 and memory 26 are merely one example of a computational configuration. Other types of computational configurations are contemplated. For example, all or parts of the implementations may be circuitry that includes a type of controller, including an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples. The above discussion regarding the at least one processor 25 and the at least one memory 26 may be applied to other devices, such as the evaluation unit 24, discussed above.

Besides the controller 13, the driver assistance system 14 may comprise a user interface 15 in communication with the controller 13 and the sensor arrangement 12 enabling an operator of the telehandler 2 to trigger one or more different actions of the telehandler 2 and/or to define parameters considered for performing the one or more different actions of the telehandler 2 via an input on the user interface 15. Various user interfaces 15 are contemplated. As one example, the user interface 15 may comprise a touch screen in which output may be displayed on the touch screen and operator input may be input via the touch screen. Other user interfaces are contemplated.

In one or some embodiments, the sensor arrangement 12 is further configured to optically identify a location, such as a target location 16 (e.g., a predefined location), on the bale 9 for picking up the bale 9 with the bale handling implement 8. Alternatively, the controller 13 is configured to identify the target location 16 on the bale 9. In this regard, at least one of the controller 13 or the sensor arrangement 12 may determine the target location 16 on the bale 9. In one or some embodiments, the target location 16 defines a preferred or an ideal position on the bale 9 at or relative to which to contact the bale 9 with the bale handling implement 8 for picking up the bale 9. For example, when using a bale grab as the bale handling implement 8, the target location 16 may be a preferred position or an ideal position on the bale 9 for grabbing the bale 9 with the bale grab, or for the bale handling implement 8 to be relative to when grabbing the bale 9. When using a bale spear as the bale handling implement 8, for example, the target location 16 may be an ideal position on the bale 9 for inserting the spear(s) of the bale spear into the bale 9. In one or some embodiments, the target location 16 on the bale 9, in order to pick up the bale 9 with the bale handling implement 8 at the target location 16 or relative to the target location 16, may be predefined by the operator of the telehandler 2 using an input on the user interface 15 of the driver assistance system 14. In one or some embodiments, the user interface 15, which may comprise a touch screen, may output an image of a bale (e.g., a pre-stored image of the bale in memory 26). The operator may touch the touch screen of the user interface 15 in order to indicate where on the image of the bale that the operator defines as the target location 16 on the bale 9. After which, the target location 16 on the bale may be stored in memory 26, which may later be accessed by the controller 13 in its determination as to the target location 16 on the bale 9 or may later be sent to the sensor arrangement 12 for it to use in the sensor arrangement 12 determining the target location 16 on the bale 9. Alternatively, the target location 16 may be predefined as a position just below the center of the bale 9. For example, the target location 16 on the bale may be pre-stored in memory 26 so that operator input need not be provided in order to define the target location 16.

In order to assist the operator of the telehandler 2 in picking up the bale(s) 9 from the ground, the controller 13 of the driver assistance system 14 may be configured to automatically control the hydraulically-actuated lifting assembly 7 based on target location 16 on the bale 9 identified by the sensor arrangement 12. In one or some embodiments, the controller 13 of the driver assistance system 14 may be configured to automatically control the hydraulically-actuated lifting assembly 7 based on the target location 16 on the bale 9 identified by the sensor arrangement 12 at least partly while the telehandler 2 is approaching the bale 9. In one or some embodiments, the operator is able to initiate the automatic control routine of the hydraulically-actuated lifting assembly 7 via an input on the user interface 15 of the driver assistance system 14 prior to picking up a first bale 9 during a bale pick up operation of several bales 9 deposited on the ground of the agricultural field 10.

In one or some embodiments, the controller 13 of the driver assistance system 14 is configured to automatically control the hydraulically-actuated lifting assembly 7 at least partly while the telehandler 2 is approaching the bale 9 to pick up the bale 9 in such a manner that the bale handling implement 8 is positioned at the identified target location 16 on the bale 9 or relative to the identified target location 16 on the bale 9 when picking up the bale 9 with the bale handling implement 8 from the ground, wherein the bale 9 may remain in its position on the ground while positioning the bale handling implement 8 at or in predetermined relation to the identified target location 16 on the bale 9 (e.g., the bale 9 remains stationary, such as unmoved, as the bale handling implement 8 moves its position (e.g., via any one, any combination, or all of the multiple degrees of freedom) in order to, when the bale handling implement 8 makes contact with the bale 9, the contact that the bale handling implement 8 makes is at or in predetermined relation to the identified location target location on the bale 9).

In one or some embodiments, the disclosed way of automatically controlling the hydraulically-actuated lifting assembly 7 may eliminate or may reduce (such as significantly reduce) the risk of damaging a wrapping material applied on the bale 9 as the bale 9 is not dragged on the ground while the bale handling implement 8 is positioned on the bale 9. In this regard, in one or some embodiments, the bale handling implement 8 is positioned in its predetermined orientation (at or in predetermined relation to the target location 16) so that upon and/or after contact of the bale handling implement 8 with the bale 9, the bale handling implement 8 need not move its position in order for the bale handling implement 8 to contact the bale 9 at or in predetermined relation to the target location 16.

In one or some embodiments, the sensor arrangement 12 is further configured to iteratively determine, such as continuously determine in a plurality of iterations, a distance between the telehandler 2 and the bale 9 at least partly while the telehandler 2 is approaching the bale 9. The distance measured by the sensor arrangement 12 which is successively varying while the telehandler 2 is approaching the bale 9 may be used by the controller 13 as an input parameter to automatically control the hydraulically-actuated lifting assembly 7. Apart therefrom, the controller 13 may be configured to receive the speed of the telehandler 2 while approaching the bale 9 and to use the speed as a further input parameter to automatically control the hydraulically-actuated lifting assembly 7. For example, in one embodiment, the speed of the telehandler 2 may be determined by a speed sensor 27. The controller 13 may also be configured to generate one or more commands for the motor 6 of the telehandler 2 to adjust the speed while approaching the bale 9 to enable a smooth approach to the bale 9 and a precise positioning of the bale handling implement 8 relative to the bale 9 while controlling the hydraulically-actuated lifting assembly 7 such that a precise positioning of the bale handling implement 8 relative to the bale 9 can be achieved. For example, the controller 13 may automatically reduce the speed of the vehicle (without any need for operator input) in order to reduce the inertia of the telehandler 2 when the bale handling implement 8 physically contacts the bale 9 and/or to give more time for the bale handling implement 8 to move to the proper position in advance of physical contact with the bale 9.

Immediately before the bale handling implement 8 reaches the position at or in predetermined relation to the identified target location 16 on the bale 9 (e.g., the bale handling implement 8 is proximate to, but not in physical contact with, the target location 16 of the bale 9, such as the bale handling implement 8 is less than or no greater than a predetermined distance from the predefined location on the bale, such as the bale handling implement 8 is less than 5 feet from or in predetermined relation to the target location 16 of the bale 9, the bale handling implement 8 is less than 4 feet from or in predetermined relation to the target location 16 of the bale 9, the bale handling implement 8 is less than 3 feet from or in predetermined relation to the target location 16 of the bale 9, the bale handling implement 8 is less than 2 feet from or in predetermined relation to the target location 16 of the bale 9, or the bale handling implement 8 is less than 1 foot from or in predetermined relation to the target location 16 of the bale 9), the controller 13 may be configured to automatically control a longitudinal movement of the bale handling implement 8 based on the speed of the telehandler 2 such that the bale 9 is remaining in its position on the ground when contact is established between the bale 9 and the bale handling implement 8 (e.g., when contacting using the bale spear or bale grab). A so-coordinated movement of the telehandler 2 in the direction of the bale 9 on the one hand and the hydraulically-actuated lifting assembly 7 on the other hand may ensure that the bale 9 is not dragged on the ground (e.g., the bale remains in its position on the ground without being dragged on the ground). For example, when using a bale spear as the bale handling implement 8, the hydraulically-actuated lifting assembly 7 may be successively retracted in its longitudinal direction while the telehandler 2 is moving in the direction of the bale 9 with a specific speed. When establishing physical contact between the bale 9 and the bale spear, the bale 9 may not be dragged on the ground, but a force may be applied on the bale 9 via the bale spear sufficient to push the spear(s) of the bale spear into the bale 9. Upon the bale handling implement 8 being positioned at or in predetermined relation to the identified target location 16 on the bale 9, the controller 13 may be configured to automatically control the hydraulically-actuated lifting assembly 7 such that the bale handling implement 8 with the bale 9 grabbed is lifted up (such as immediately lifted up) from the ground while the telehandler 2 is still constantly moving ahead. This may be done without the bale 9 being dragged on the ground (or being dragged less than without the pre-positioning of the bale handling implement). In one or some embodiments, in a worst case scenario, for example due to an inertia of the actuated components, the bale 9 may only be dragged on the ground to a negligible extent when the bale 9 is lifted up from the ground of the agricultural field 10.

Thus, in one or some embodiments, after the bale handling implement physically contacts the bale (e.g., via the bale spear or bale grab), the controller is configured to automatically control the hydraulically-actuated lifting assembly 7 such that the bale handling implement, with the bale physically attached, is lifted upward. Determining whether physical contact of the bale handling implement with the bale has occurred may be performed in one of several ways. In one way, the controller 13 may analyze the output generated by the sensor arrangement 12 in order to determine whether physical contact has occurred. Alternatively, or in addition, a pressure sensor may be used to sense pressure of the hydraulic fluid in one or more cylinders of the hydraulically-actuated lifting assembly 7 in order to determine whether there is a change (e.g., an increase in pressure, such as a momentary increase in pressure) in pressure of the hydraulic fluid. Responsive to the controller 13 determining that there is a change in pressure of the hydraulic fluid, the controller 13 may determine that physical contact has occurred.

When the bale 9 is lifted from the ground as shown in Fig. 2, the controller 13 may be configured to automatically control the hydraulically-actuated lifting assembly 7 such that the bale handling implement 8 with the bale 9 attached is positioned in a predefined bale transport position above the ground and/or a predefined bale transport orientation relative to the ground. Here as well, the bale transport position and/or a predefined bale transport orientation may be predefined by the operator of the telehandler 2 using an input on the user interface 15 of the driver assistance system 14. As one example, the user interface 15 may comprise a touch screen. The touch screen may output a plurality of bale transport position options and/or a predefined bale transport orientation options in different parts of the touch screen, with the operating touching the touch screen to indicate a selection of one of the plurality of bale transport position options and/or one of the predefined bale transport orientation options. In one or some embodiments, the transport position and/or a predefined bale transport orientation, which may be assumed or taken by the bale handling implement 8 after having picked up the bale 9 from the ground, may enable the telehandler 2 to travel to a bale storage 17 or travel to another bale 9 on the ground with an optimum speed level, thereby potentially speeding up the bale pick up operation while maintaining a secure attachment of the bale 9 on the bale handling implement 8 during the transport phase.

As indicated above, the hydraulically-actuated lifting assembly 7 may comprise multiple actuators 11. In one or some embodiments, the controller 13 of the driver assistance system 14 may be configured to automatically control these actuators 11 of the hydraulically-actuated lifting assembly 7 to move the bale handling implement 8 in multiple degrees of freedom for picking up the bale(s) 9 from the ground of the agricultural field 10. In more detail, for all sub-steps performed or controlled by the controller 13, the controller 13 may be configured to directly control the respective actuators 11 of the hydraulically-actuated lifting assembly 7 to position the bale handling implement 8 as required.

The aforementioned features may be equally applied to a work vehicle 1 in the form of a tractor or a wheel loader, wherein the hydraulically-actuated lifting assembly 7 may be configured as a front loader or a three point linkage. In this regard, any discussion regarding the telehandler 2 may be applied to a tractor or a wheel loader.

In the following, an exemplary automatic control of the hydraulically-actuated lifting assembly 7 and in turn of the attached bale handling implement 8 according to one aspect of the invention is described.

In one or some embodiments, the telehandler 2 may be located on the agricultural field 10 in order to pick up several bales 9 deposited on the ground by an agricultural baler. Prior to starting the bale pick up operation, the operator of the telehandler 2 may define a target location 16 on the bale 9 for picking up the same with the bale handling implement 8 attached to the hydraulically-actuated lifting assembly 7 of the telehandler via the user interface 15, which may be used to identify a respective position on the bale 9 (that is to be picked up) via the sensor arrangement 12. Alternatively, or in addition, the operator of the telehandler 2 may define a bale transport position and/or a predefined bale transport orientation via the user interface 15, which may comprise a position the bale handling implement 8 is to be positioned in after a bale 9 has been lifted up from the ground. Alternatively, or in addition, any one, any combination, or all of the target location 16, the bale transport position and/or a predefined bale transport orientation may be predefined without any need for user input. Rather, a memory, such as memory 26, may store the predefined the target location 16 and/or the bale transport position.

Then, the operator of the telehandler 2 may begin the bale pick up operation by moving the telehandler 2 in the direction of a first bale 9 the operator intends to pick up first from the ground. In one or some embodiments, while the telehandler 2 is approaching the bale 9, the operator initiates the automatic control routine for picking up the bales 9 from the ground by activating the control routine via an input on the user interface 15. Alternatively, or in addition, the controller 13, with input from the sensor arrangement, may automatically identify the first bale 9 for pick up so that operator input via the user interface 15 is not needed to begin the pick up operation. Having activated the control routine (or having automatically activated the control routine), the sensor arrangement 12 may be configured to perform any one, any combination, or all of: detect the first bale 9 on the ground; detect the position of the first bale 9 on the ground; or detect the spatial orientation of the first bale 9 on the ground.

Further, the sensor arrangement 12 may be configured to identify the target location 16 where to pick up the bale at or where in predetermined relation to the target location 16 to pick up the bale 9 with the bale handling implement 8 on the first bale 9. As discussed above, the target location 16 at or in relation to pick up the bale 9 may be determined in one of several ways, such as via operator input or not. Further, the sensor arrangement 12 may detect the bale 9 and/or detect the position of the bale 9 on the ground and/or detect the spatial orientation of the bale 9 on the ground. Given these two inputs (e.g., the target location 16 and the input from the sensor arrangement 12), the controller 13 may identify the target location 16 at or relative to pick up the bale 9. By way of example, the controller 13 may compare the target location 16 in order to determine where on the bale 9 (being sensed by the sensor arrangement 12) is located the target location 16. Specifically, the controller 13 may first identify where on the bale 9 the target location 16 is located. As one example, the target location 16 may be located in the center of one of the flat circular faces of the bale 9. After which, the controller 13 may identify the corresponding location on the bale 9 that is to be picked up. This is illustrated in Fig. 1, in which the controller 13 identifies the corresponding target location 16 (identified as an "*" in Fig. 1) on the bale 9. The controller 13 may then command the bale handling implement 8 where to pick up the bale 9 relative to the target location 16 (e.g., as shown in Fig. 2, the bale handling implement 8 picks up the bale 9 on the cylindrical surface that is perpendicular to the flat side on which the target location 16 is identified in Fig. 1). The identification of the target location 16 on the bale 9 may be performed in one of several ways. In one embodiment, the identification of the target location may be relative to the bale 9 itself (e.g., the bale is sensed by the sensor arrangement 12 (e.g., the sensor arrangement 12 generates sensor data as to the position and/or spatial arrangement of the bale 9), with the target location 16 being identified based on or in relation to the sensor data). Alternatively, or in addition, the identification of the target location 16 may be in 3-D space without reference to the bale itself (e.g., absolute 3-D space coordinates).

In either instance, the controller 13 may periodically update the identification (e.g., the target location relative to the latest sensor data and/or the target location in absolute 3-D space) as the telehandler 2 approaches the bale 9. In this way, the bale handling implement 8 may be oriented so that when the bale handling implement 8 contacts the bale 9 at the target location 16, the bale 9 does not move (or moves an insignificant amount). In particular, while the telehandler 2 is successively approaching the first bale 9, the controller 13 may be configured to control the hydraulically-actuated lifting assembly 7 of the telehandler 2 in such a manner that when picking up the first bale 9 with the bale handling implement 8 is exactly positioned at the target location 16 on the first bale 9 (e.g., in the instance of using a bale spear) or relative to the target location 16 (e.g., in the instance of using a bale grab). In order to achieve this, the controller 13 may automatically control the different actuators 11 of the hydraulically-actuated lifting assembly 7 depending on the distance of the telehandler 2 relative to the first bale 9 as well as the speed of the telehandler 2. Prior to establishing contact between the bale handling implement 8 and the first bale 9, the controller 13 may control the respective actuators 11 of the hydraulically-actuated lifting assembly 7 such that the hydraulically-actuated lifting assembly 7 is retracted while the telehandler 2 is constantly moving ahead. The first bale 9 may then be grabbed by the bale handling implement 8. Upon grabbing the first bale 9, the bale handling implement 8 may immediately be tilted and lifted up from the ground and positioned in its bale transfer position above the ground. The telehandler 2 may then be guided to the next bale 9 or to the bale storage 17. Guiding the telehandler 2 to the next bale 9 or bale storage 17 may be part of the automatic control routine and/or manually performed by the operator. When manually guiding the telehandler 2 to the next bale 9, the automatic control routine may again be initiated by the operator prior to picking up the next bale 9. In such a case, the controller 13 may control the actuators 11 of the hydraulically-actuated lifting assembly 7 initially (e.g., prior to picking up the next bale 9) in such a manner that the bale handling implement 8 is positioned in a starting position enabling to pick up a second bale 9.

The particular combinations of elements and features in the above detailed embodiments are exemplary only; the interchanging and substitution of these teachings with other teachings in this and the patents/applications incorporate by reference are also expressly contemplated. As those skilled in the art will recognize, variations, modifications, and other implementations of what is described herein can occur to those of ordinary skill in the art without departing from the spirit and the scope of the invention as claimed. Accordingly, the foregoing description is by the way of example only and is not intending as limiting. In the claims, the wording "comprising" does not exclude other elements or steps, and the identified article "a" or "an" does not exclude a plurality. The mere fact that certain measures are recited in mutually different dependent claims does not indicate that a combination of these measures cannot be used to advantage. The inventions scope is defined in the following claims and the equivalents thereto. Furthermore, reference signs used in the description and claims do not limit the scope of the invention as claimed.

Further, it is intended that the foregoing detailed description be understood as an illustration of selected forms that the invention may take and not as a definition of the invention. It is only the following claims, including all equivalents, that are intended to define the scope of the claimed invention. Further, it should be noted that any aspect of any of the preferred embodiments described herein may be used alone or in combination with one another. Finally, persons skilled in the art will readily recognize that in preferred implementation, some, or all of the steps in the disclosed method are performed using a computer so that the methodology is computer implemented. In such cases, the resulting physical properties model may be downloaded or saved to computer storage.

Various embodiments of the invention are contemplated as shown in the following listing of claims:
Claim 1: A work vehicle (1), in particular a tractor or a telehandler (2), comprising: a work vehicle chassis (4); a hydraulically-actuated lifting assembly (7) mounted on the work vehicle chassis (4); a bale handling implement (8) for picking up at least one bale (9) from the ground, the bale handling implement (8) being attached to the hydraulically-actuated lifting assembly (7) and the hydraulically-actuated lifting assembly (7) being configured to enable movement of the bale handling implement (8) relative to the work vehicle chassis (4) in multiple degrees of freedom; a sensor arrangement (12) attached to the work vehicle chassis (4), the sensor arrangement (12) being positioned and configured to optically detect the bale (9) on the ground and a position and/or a space orientation of the bale (9); and a driver assistance system (14) comprising a controller (13), the controller (13) being in communication with the sensor arrangement (12); characterized in that:
   the sensor arrangement (12) is configured to optically identify a target location (16) on the bale (9) for picking up the bale (9) with the bale handling implement (8); and the controller (13) is configured to automatically control the hydraulically-actuated lifting assembly (7) based on the identified target location (16) on the bale (9) while the work vehicle (1) is approaching the bale (9) such that the bale handling implement (8) is positioned at the identified target location (16) on the bale (9) when picking up the bale (9) from the ground.
Claim 2: The work vehicle (1) according to claim 1, characterized in that the controller (13) is configured to automatically control the hydraulically-actuated lifting assembly (7) such that the bale (9) is remaining in its position on the ground while positioning the bale handling implement (8) at the identified target location (16) on the bale (9).
Claim 3: The work vehicle (1) according to claim 1 or 2, characterized in that the sensor arrangement (12) is configured to continuously determine a distance between the work vehicle (1) and the bale (9) while the work vehicle (1) is approaching the bale (9), wherein the controller (13) is configured to automatically control the hydraulically-actuated lifting assembly (7) based on the determined distance between the work vehicle (1) and the bale (9).
Claim 4: The work vehicle (1) according to one of the preceding claims, characterized in that the controller (13) is configured to receive and adjust the work vehicle speed while approaching the bale (9), wherein the controller (13) is configured to automatically control the hydraulically-actuated lifting assembly (7) based on the work vehicle speed.
Claim 5: The work vehicle (1) according to claim 4, characterized in that, immediately before the bale handling implement (8) reaches the position at the identified target location (16) on the bale (9), the controller (13) is configured to automatically control a longitudinal movement of the bale handling implement (8) based on the work vehicle speed such that the bale (9) is remaining in its position on the ground when the bale handling implement (8) is positioned at the identified target location (16) on the bale (9).
Claim 6: The work vehicle (1) according to one of the preceding claims, characterized in that, upon the bale handling implement (8) being positioned at the identified target location (16) on the bale (9), the controller (13) is configured to automatically control the hydraulically-actuated lifting assembly (7) such that the bale handling implement (8) with the bale (9) attached is immediately lifted up.
Claim 7: The work vehicle (1) according to one of the preceding claims, characterized in that the controller (13) is configured to automatically control the hydraulically-actuated lifting assembly (7) such that the bale handling implement (8) with the bale (9) attached is positioned in a predefined bale transport position above the ground and/or a predefined bale transport orientation relative to ground.
Claim 8: The work vehicle (1) according to one of the preceding claims, characterized in that the hydraulically-actuated lifting assembly (7) comprises multiple actuators (11), wherein the controller (13) is configured to automatically control the actuators (11) of the hydraulically-actuated lifting assembly (7) to move the bale handling implement (8) in multiple degrees of freedom.
Claim 9: The work vehicle (1) according to one of the preceding claims, characterized in that the driver assistance system (14) comprises a user interface (15), the user interface (15) being in communication with the controller (13), wherein the user interface (15) is configured to receive an input by an operator of the work vehicle (1) initiating the automatic control of the hydraulically-actuated lifting assembly (7), predefining the target location (16) on the bale (9) for picking up the bale (9) and/or predefining the bale transport position.
Claim 10: The work vehicle (1) according to one of the preceding claims, characterized in that the bale handling implement (8) is configured for picking up two or more bales.
Claim 11: The work vehicle (1) according to one of the preceding claims, characterized in that the bale handling implement (8) is configured as a bale grab or a bale spear.
Claim 12: The work vehicle (1) according to one of the preceding claims, characterized in that the hydraulically-actuated lifting assembly (7) is configured as a front loader, a telescopic boom or a three-point linkage.
Claim 13: The work vehicle (1) according to one of the preceding claims, characterized in that the sensor arrangement (12) is configured as a camera arrangement, preferably a 3D camera arrangement, and/or a laser sensor arrangement, preferably a laser scanner arrangement.
Claim 14: A method for operating a work vehicle (1), in particular a tractor or a tele handler, the work vehicle (1) comprising: a work vehicle chassis (4); a hydraulically-actuated lifting assembly (7) mounted on the work vehicle chassis (4); a bale handling implement (8) for picking up at least one bale (9) from the ground, the bale handling implement (8) being attached to the hydraulically-actuated lifting assembly (7) and the hydraulically-actuated lifting assembly (7) being configured to enable movement of the bale handling implement (8) relative to the work vehicle chassis (4) in multiple degrees of freedom; a sensor arrangement (12) attached to the work vehicle chassis (4), the sensor arrangement (12) being positioned and configured to optically detect the bale (9) on the ground and a position and/or a space orientation of the bale (9); and a driver assistance system (14) comprising a controller (13), the controller (13) being in communication with the sensor arrangement (12), the method being characterized by
   optically identifying a predefined target location (16) on the bale (9) for picking up the bale (9) with the bale handling implement (8) via the sensor arrangement (12); and automatically controlling the hydraulically-actuated lifting assembly (7) via the controller (13) based on the identified target location (16) on the bale (9) while the work vehicle (1) is approaching the bale (9) such that the bale handling implement (8) is positioned at the identified target location (16) on the bale (9) when picking up the bale (9) from the ground.
Claim 15: The method according to claim 14, characterized by automatically controlling the hydraulically-actuated lifting assembly (7) via the controller (13) such that the bale (9) is remaining in its position on the ground while positioning the bale handling implement (8) at the identified target location (16) on the bale (9).

### List of Reference Numbers

- 1: work vehicle
- 2: telehandler
- 3: cabin
- 4: work vehicle chassis
- 5: ground engaging device
- 6: motor
- 7: hydraulically-actuated lifting assembly
- 8: bale handling implement
- 9: bale
- 10: agricultural field
- 11: hydraulic actuators
- 12: sensor arrangement
- 13: controller
- 14: driver assistance system
- 15: user interface
- 16: target location
- 17: bale storage
- 18: arrow
- 19: arrow
- 20: arrow
- 21: arrow
- 22: dotted line
- 23: dotted line
- 24: evaluation unit
- 25: processor
- 26: memory
- 27: speed sensor

## Claims

1. A work vehicle comprising:
a work vehicle chassis;
a hydraulically-actuated lifting assembly mounted on the work vehicle chassis;
a bale handling implement configured to pick up at least one bale from ground, the bale handling implement being attached to the hydraulically-actuated lifting assembly, the hydraulically-actuated lifting assembly being configured to enable movement of the bale handling implement relative to the work vehicle chassis in multiple degrees of freedom;
a sensor arrangement attached to or positioned relative to the work vehicle chassis, the sensor arrangement configured to optically: and detect the bale on the ground; and
a driver assistance system comprising at least one controller in communication with the sensor arrangement;
wherein at least one of the sensor arrangement or the at least one controller is configured to identify a target location on the bale for picking up the bale with the bale handling implement; and
wherein the at least one controller configured to:
automatically control the hydraulically-actuated lifting assembly based on the target location on the bale at least partly while the work vehicle is approaching or is proximate to the bale such that the bale handling implement is positioned at or relative to the target location on the bale when picking up the bale from the ground.

2. The work vehicle of claim 1, wherein the work vehicle comprises a tractor or a telehandler; and
wherein the controller is configured to automatically control the hydraulically-actuated lifting assembly such that the bale remains in its position on the ground while positioning the bale handling implement to physically contact the bale at or relative to the target location identified on the bale.

3. The work vehicle of claim 1, wherein the sensor arrangement is configured to determine a distance between the work vehicle and the bale at least partly while the work vehicle is approaching the bale; and
wherein the controller is configured to automatically control the hydraulically-actuated lifting assembly based on the determined distance between the work vehicle and the bale.

4. The work vehicle of claim 3, wherein the sensor arrangement is configured to iteratively determine, in a plurality of iterations, the distance between the work vehicle and the bale at least partly as the work vehicle is approaching the bale; and
wherein the controller is configured to automatically iteratively control the hydraulically-actuated lifting assembly based on the determined distance between the work vehicle and the bale in the plurality of iterations.

5. The work vehicle of claim 1, wherein the controller is further configured to receive speed of the work vehicle at least partly while the work vehicle is approaching the bale; and
wherein the controller is configured to automatically control the hydraulically-actuated lifting assembly based on the speed of the work vehicle.

6. The work vehicle of claim 5, wherein, responsive to determining that the bale handling implement is no greater than a predetermined distance from the target location on the bale, the controller is configured to automatically control a longitudinal movement of the bale handling implement based on the speed of work vehicle such that the bale remains unmoved in its position on the ground when the bale handling implement is positioned to physically contact the target location on the bale.

7. The work vehicle of claim 5, wherein, responsive to controlling the bale handling implement, the controller is further configured to automatically command modification of the speed of the work vehicle.

8. The work vehicle of claim 1, wherein, upon the bale handling implement physically contacting the bale, the controller is configured to automatically control the hydraulically-actuated lifting assembly such that the bale handling implement, with the bale physically attached, is lifted upward.

9. The work vehicle of claim 8, wherein the controller is configured to automatically control the hydraulically-actuated lifting assembly such that the bale handling implement with the bale attached is positioned in a predefined bale transport position above the ground or a predefined bale transport orientation relative to ground.

10. The work vehicle of claim 1, wherein the hydraulically-actuated lifting assembly comprises a plurality of actuators; and
wherein the controller is configured to automatically control the plurality of actuators of the hydraulically-actuated lifting assembly to move the bale handling implement in the multiple degrees of freedom.

11. The work vehicle of claim 1, wherein the driver assistance system comprises a user interface, the user interface being in communication with the at least one controller;
wherein the user interface is configured to receive input from an operator of the work vehicle;
wherein responsive to receiving the input from the operator, the controller is configured to perform one or more of:
initiate automatic control of the hydraulically-actuated lifting assembly;
determine the target location at or relative to for picking up the bale; or
determine one or both of a predefined bale transport position or a predefined bale transport orientation, wherein the predefined bale transport position comprises a position above ground during transport of the bale and wherein the predefined bale transport orientation relative to ground.

12. The work vehicle of claim 1, wherein the bale handling implement is configured for picking up two or more bales.

13. The work vehicle of claim 1, wherein the bale handling implement is configured as a bale grab or a bale spear.

14. The work vehicle of claim 1, wherein the hydraulically-actuated lifting assembly is configured as a front loader, a telescopic boom or a three-point linkage.

15. The work vehicle of claim 1, wherein the sensor arrangement comprises one or both of a camera arrangement or a laser sensor arrangement.

16. The work vehicle of claim 15, wherein the sensor arrangement comprises a 3D camera arrangement and a laser scanner arrangement.

17. A method for operating a work vehicle comprising:
operating the work vehicle that comprises:
a work vehicle chassis;
a hydraulically-actuated lifting assembly mounted on the work vehicle chassis;
a bale handling implement configured to pick up at least one bale from ground, the bale handling implement being attached to the hydraulically-actuated lifting assembly, the hydraulically-actuated lifting assembly being configured to enable movement of the bale handling implement relative to the work vehicle chassis in multiple degrees of freedom;
a sensor arrangement attached to or positioned relative to the work vehicle chassis, the sensor arrangement optically: detecting the bale on the ground; and detecting one or both of a position or a space orientation of the bale; and
a driver assistance system comprising at least one controller in communication with the sensor arrangement;
identifying, using at least one of the sensor arrangement or the at least one controller, a target location on the bale for use in picking up the bale with the bale handling implement; and
automatically controlling the hydraulically-actuated lifting assembly via the controller based on the target location identified on the bale at least partly while the work vehicle is approaching the bale such that the bale handling implement is positioned at or relative to the target location identified on the bale when picking up the bale from the ground.

18. The method of claim 17, wherein automatically controlling the hydraulically-actuated lifting assembly via the controller is such that the bale remains in its position on the ground when the bale handling implement contacts the bale at or relative to the target location identified on the bale.

19. The method of claim 17, wherein the work vehicle comprises a tractor or a telehandler; and
wherein the controller automatically controls the hydraulically-actuated lifting assembly is such that the bale remains in its position on the ground while positioning the bale handling implement to physically contact the bale at or relative to the target location identified on the bale.

20. The method of claim 17, wherein the sensor arrangement determines a distance between the work vehicle and the bale at least partly while the work vehicle is approaching the bale; and
wherein the controller automatically controls the hydraulically-actuated lifting assembly based on the determined distance between the work vehicle and the bale.
